# EUROPEAN PATENT APPLICATION

(11) **EP 4 765 988 A1**
(43) Date of publication of application: **24.06.2026**
(21) Application number: 23949666.4
(22) Date of filing: 18.08.2023
(51) Int. Cl.: H04W 72/23, H04W 16/28, H04W 72/232

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); ECHIGO, Haruhi, Tokyo 100-6150 (JP); SHIMA, Kousuke, Tokyo 100-6150 (JP); OKAMURA, Masaya, Tokyo 100-6150 (JP)
(74) Representative: Hoffmann Eitle
(86) International application number: PCT/JP2023/029892
(87) International publication number: WO 2025/041204

(57) **Abstract**

A terminal according to one aspect of the present disclosure includes a receiving section that receives a demodulation reference signal (DMRS) mapped by using a frequency domain orthogonal cover code (FD-OCC), a time domain OCC (TD-OCC), frequency domain and time domain OCCs, frequency division multiplexing (FDM), or time division multiplexing (TDM), the DMRS being for a physical downlink control channel (PDCCH) using a plurality of layers, and a control section that controls reception of the PDCCH, based on the DMRS. According to one aspect of the present disclosure, it is possible to improve resource efficiency.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied to increase capacity of a downlink control channel in terms of improvement in resource efficiency, for example.

Meanwhile, studies have not sufficiently been made on a specific method for the increase. Unless this study is sufficient, improvement in resource efficiency may be obstructed, and an increase in communication throughput may be suppressed.

Thus, an object of the present disclosure is to provide a terminal, a radio communication method, and a base station that can improve resource efficiency.

### Solution to Problem

A terminal according to one aspect of the present disclosure includes a receiving section that receives a demodulation reference signal (DMRS) mapped by using a frequency domain orthogonal cover code (FD-OCC), a time domain OCC (TD-OCC), frequency domain and time domain OCCs, frequency division multiplexing (FDM), or time division multiplexing (TDM), the DMRS being for a physical downlink control channel (PDCCH) using a plurality of layers, and a control section that controls reception of the PDCCH, based on the DMRS.

### Advantageous Effects of Invention

According to one aspect of the present disclosure, it is possible to improve resource efficiency.

### Brief Description of Drawings

[FIG. 1] FIG. 1A is a diagram to show an example of the number of accommodated UEs per slot/symbol for each channel. FIG. 1B is a diagram to show an example of the number of accommodated UEs per cell for each channel.
[FIG. 2] FIG. 2 is a diagram to show an example of an antenna port for a PDCCH DMRS.
[FIG. 3] FIG. 3 is a diagram to show an example of a PDCCH DMRS to which an FD-OCC is applied.
[FIG. 4] FIG. 4 is a diagram to show another example of the PDCCH DMRS to which the FD-OCC is applied.
[FIG. 5] FIG. 5 is a diagram to show another example of the PDCCH DMRS to which the FD-OCC is applied.
[FIG. 6] FIG. 6 is a diagram to show an example of a PDCCH DMRS to which a TD-OCC is applied.
[FIG. 7] FIG. 7 is a diagram to show another example of the PDCCH DMRS to which the TD-OCC is applied.
[FIG. 8] FIG. 8 is a diagram to show an example of a PDCCH DMRS to which an FD-OCC and a TD-OCC are applied.
[FIG. 9] FIG. 9 is a diagram to show another example of the PDCCH DMRS to which the FD-OCC and the TD-OCC are applied.
[FIG. 10] FIG. 10 is a diagram to show an example of a PDCCH DMRS to which FDM is applied.
[FIG. 11] FIG. 11 is a diagram to show another example of the PDCCH DMRS to which the FDM is applied.
[FIG. 12] FIG. 12 is a diagram to show an example of a PDCCH DMRS to which TDM is applied.
[FIG. 13] FIG. 13 is a diagram to show another example of the PDCCH DMRS to which the TDM is applied.
[FIG. 14] FIG. 14A and FIG. 14B are diagrams to show examples of an OCC sequence.
[FIG. 15] FIG. 15 is a diagram to show another example of the OCC sequence.
[FIG. 16] FIG. 16A and FIG. 16B are diagrams to show other examples of the OCC sequence.
[FIG. 17] FIG. 17 is a diagram to show another example of the OCC sequence.
[FIG. 18] FIG. 18 is a diagram to show another example of the OCC sequence.
[FIG. 19] FIG. 19 is a diagram to show an example of transmission power for a PDCCH/DMRS according to a third embodiment.
[FIG. 20] FIG. 20 is a diagram to show an example of a schematic structure of a radio communication system according to one embodiment.
[FIG. 21] FIG. 21 is a diagram to show an example of a structure of a base station according to one embodiment.
[FIG. 22] FIG. 22 is a diagram to show an example of a structure of a user terminal according to one embodiment.
[FIG. 23] FIG. 23 is a diagram to show an example of a hardware structure of the base station and the user terminal according to one embodiment.
[FIG. 24] FIG. 24 is a diagram to show an example of a vehicle according to one embodiment.

### Description of Embodiments

### (Minimum Quality Assurance in Future Radio Communication System)

In existing radio communication systems (for example, Rel. 15 to Rel. 17), mobile communication using public networks is generally so-called best effort communication.

Such communication has characteristics that a communication carrier fails to control an instantaneous increase in the traffic volume. For example, an instantaneous/explosive increase in the traffic in a dense environment, such as a concert/stadium, poses a problem that minimum communication is not secured (such as failure in phone calls and failure in web browsing).

For existing radio communication systems (for example, Rel. 15 to Rel. 17), mission-critical use cases (for example, Ultra-Reliable and Low Latency Communications (URLLC)) have been studied.

Meanwhile, it is considered that desired communication quality (such as throughput/latency/the number of simultaneous connections) cannot be achieved when a mission-critical communication service is performed in a public network, when the neighboring traffic increases as described above, or when the traffic in the mission-critical communication service increases.

Accordingly, future radio communication systems require a mechanism for allowing minimum communication quality to be secured even for general users and for mission-critical use cases.

Meanwhile, it is difficult to assure minimum quality with limited resources.

For example, if the number of temporary users is unknown, it is difficult to perform minimum quality assurance for all users by using limited resources.

The minimum quality possible to be secured differs depending on performance/type of device/terminal, and thus it is difficult to perform minimum quality assurance capable of achieving a KPI (Key Performance Indicator) for a service required by any user.

Radio communication quality can change due to various factors at each moment, and thus it is difficult to always secure a specific performance KPI (for example, throughput/reliability).

It is difficult to secure specific quality in any location due to a factor, such as limitation on the number of base stations/transmission/reception points possible to be arranged or a surrounding communication environment.

As a method for correcting minimum quality for many terminals (user terminals, User Equipments (UEs)), simultaneous scheduling of data channels (for example, PDSCHs/PUSCHs) for many UEs is considered.

An example of computation of the number of times of multiplexing for UEs in FR1 (a case where a data transmission periodicity is 20 ms and a data size (transport block size) ≥ 320, particularly for required throughput (12.65 kbps) of VoLTE (Voice over LTE)) will be described below.

Conditions for the computation are as follows:
- Band configuration: FR1, 100 MHz, subcarrier spacing = 30 kHz.
- TDD configuration: DDDSUUDDDD (5 ms periodicity, where D is a DL slot, U is a UL slot, and S is a special slot (for simplicity, only a PDCCH can be transmitted)).
- PDCCH: Symbol #0 or symbols #0 to #1 are used. The number of bits of DCI is 40. An aggregation level as a code rate (CodeRate) less than or equal to that for the PDSCH.
- PDSCH: A DMRS (non-data multiplexing) with symbol lengths of 13 symbols and 2 symbols as mapping pattern 1, a DMRS (non-data multiplexing) with symbol lengths of 12 symbols and 2 symbols as mapping pattern 2
- PUSCH: A DMRS (non-data multiplexing) with symbol lengths of 14 symbols and 2 symbols.
- Other reference signals (RSs)/channels and the like are not considered.

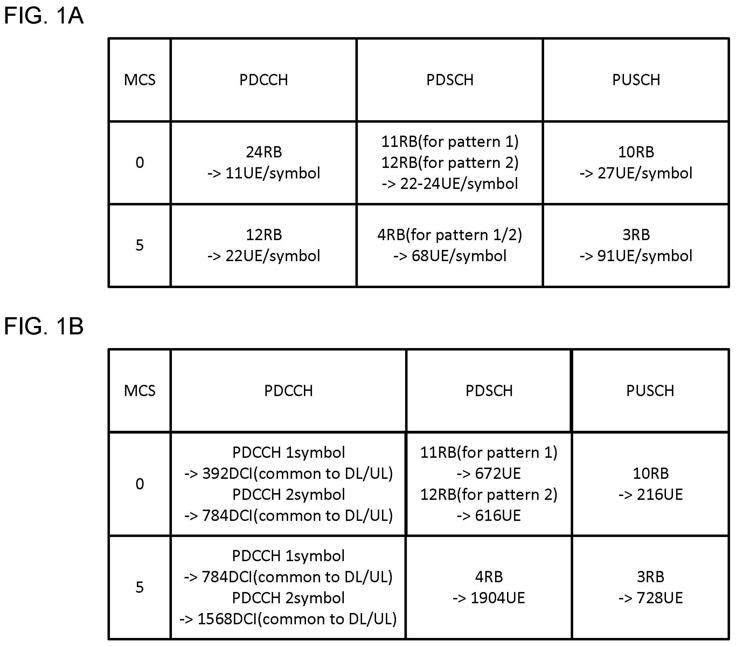

FIG. 1A is a diagram to show an example of the number of accommodated UEs per slot/symbol for each channel. FIG. 1A shows an example in which the number of accommodated UEs per slot for each channel is computed based on the number of RBs.

When the number of accommodated UEs for PDCCHs per symbol is computed under the conditions above, in a case of modulation and coding scheme (MCS) index 0, 24 resource blocks (RBs) are required per 1 UE, and thus 11 is computed as the number of accommodated UEs. Also, in a case of MCS index 5, 12 RBs are required per 1 UE, and thus 22 is computed as the number of accommodated UEs.

Similarly, when the number of accommodated UEs for PDSCHs per slot is computed, in a case of MCS index 0, 11 RBs are required per 1 UE for pattern 1 and 12 RBs are required per 1 UE for pattern 2, and thus 22 and 24 are computed as the numbers of accommodated UEs. Also, in a case of MCS index 5, 4 RBs are required per 1 UE for patterns 1 and 2, and thus 68 is computed as the number of accommodated UEs.

Furthermore, when the number of accommodated UEs for PUSCHs per slot is computed, in a case of MCS index 0, 10 RBs are required per 1 UE, and thus 27 is computed as the number of accommodated UEs. Also, in a case of MCS index 5, 3 RBs are required per 1 UE, and thus 91 is computed as the number of accommodated UEs.

FIG. 1B is a diagram to show an example of the number of accommodated UEs per cell for each channel. FIG. 1B shows an example in which the number of accommodated UEs per cell for each channel (the number of DCIs for the PDCCH) is computed based on the TDD configuration.

When the number for PDCCHs/DCIs per cell is computed under the conditions above, in a case of MCS index 0, 392 DCIs (UL DCI and DL DCI) can be accommodated for a 1-symbol PDCCH, and 784 DCIs (UL DCI and DL DCI) can be accommodated for a 2-symbol PDCCH. Also, in a case of MCS index 5, 784 DCIs (UL DCI and DL DCI) can be accommodated for a 1-symbol PDCCH, and 1568 DCIs (UL DCI and DL DCI) can be accommodated for a 2-symbol PDCCH.

Similarly, when the number of accommodated UEs for PDSCHs per cell is computed, in a case of MCS index 0, 11 RBs are required per 1 UE for pattern 1, and thus 672 is computed as the number of accommodated UEs, and 12 RBs are required per 1 UE for pattern 2, and thus 616 is computed as the number of accommodated UEs. Also, in a case of MCS index 5, 4 RBs are required per 1 UE for patterns 1 and 2, and thus 1904 is computed as the number of accommodated UEs.

Furthermore, when the number of accommodated UEs for PUSCHs per cell is computed, in a case of MCS index 0, 10 RBs are required per 1 UE, and thus 216 is computed as the number of accommodated UEs. Also, in a case of MCS index 5, 3 RBs are required per 1 UE, and thus 728 is computed as the number of accommodated UEs.

In this manner, under the assumption of the required throughput of VoLTE, PUSCHs with up to 216 UEs (in a case of MCS index 0) can be allocated per slot even in the TDD configuration in which DL resources are greater than UL resources.

Scheduling of the PUSCHs with 216 UEs requires that control channels (for example, PDCCHs/DCIs) for scheduling the PUSCHs are transmitted in one or a plurality of DL slots.

As described above, the number for PDCCHs/DCIs per cell is at least about 400, and thus is considered to be sufficiently large.

However, this is merely an example of a case where PDCCHs/DCIs can be spread over to be transmitted in all PDCCH resources. In actual transmission, due to overbooking of PDCCHs, a base station fails to simultaneously transmit such many PDCCHs as the above-described computed number. In other words, PDCCH candidate resources overlapping between UEs in the time domain cause a state in which PDCCHs cannot be transmitted.

### (Analysis)

Thus, as a method for minimum quality correction, a technique for improving frequency/space utilization efficiency for allocating PDCCHs capable of accommodating a larger number of UEs by using limited resources is under study to simultaneously schedule data channels (for example, PDSCHs/PUSCHs) for many UEs.

It is preferable to increase PDCCH capacity also in terms of general resource efficiency improvement in future radio communication systems.

Meanwhile, studies have not sufficiently been made on such a PDCCH definition method. Unless this study is sufficient, improvement in resource efficiency may be obstructed, minimum quality assurance for communication cannot be secured, and an increase in communication throughput may be suppressed.

Thus, the inventors of the present invention came up with the idea of a method of resolving the problem above.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, drop, stop, cancel, puncture, rate match, postpone, not transmit, and the like may be interchangeably interpreted.

### (Radio Communication Method)

A UE may receive a PDCCH by using more than one rank/layer.

The PDCCH is received by using a plurality of ranks/layers, thereby enabling frequency resources (for example, an aggregation level) for transmission of the PDCCH with a required code rate to be reduced, which can improve multiplexing capacity/capacity (PDCCH capacity) for the UE.

Each embodiment of the present disclosure may be applied only when a specific parameter/field is configured by using higher layer signaling (for example, RRC signaling/MAC CE).

For example, the number of received layers/ranks for the PDCCH may be configured to the UE by using higher layer signaling, and the UE may receive DCI by using the configured number of layers/ranks.

For example, a maximum number of received layers/ranks for the PDCCH may be configured to the UE by using higher layer signaling, and the UE may receive DCI by using the number of layers/ranks less than or equal to the configured maximum number of layers/ranks.

The configuration by the higher layer signaling may be performed per search space/per CORESET/per BWP/per CC/per band/per UE, for example.

Each embodiment of the present disclosure may be applied only when specific UE capability information (support of a specific UE capability) is reported.

The reporting of the UE capability information may be performed per band, per band combination (BC), per band in BC, or per CC per band in BC, for example.

Each embodiment of the present disclosure may be applied to a specific search space (SS)/SS set.

The specific SS/SS set may be, for example, a UE-specific search space (USS) or a specific common search space (CSS, for example, type 3 CSS). With such configuration, a CSS for a plurality of UEs, such as a CSS of type 0/0A/1/2, can be excluded, for example.

Each embodiment of the present disclosure may be applied to (PDCCH for transmitting) a specific DCI format.

The specific DCI format may be, for example, a DCI format excluding a group-common DCI format (for example, DCI format 2_x (where x is any integer)) and a DCI format for multicast/broadcast (for example, DCI format 4_x (where x is any integer)). With such configuration, a DCI format for a plurality of UEs can be excluded.

The specific DCI format may be, for example, at least one of a group-common DCI format (for example, DCI format 2_x (where x is any integer)) and a DCI format for multicast/broadcast (for example, DCI format 4_x (where x is any integer)).

Each embodiment of the present disclosure may be applicable to a specific time resource (for example, a slot/symbol).

The specific time resource may be, for example, a DL/UL/special slot (or symbol).

Each embodiment of the present disclosure may be applied to a specific BWP/CC, for example.

For example, the specific BWP/CC may be, for example, a BWP/CC of a PCell/PSCell/SpCell or a BWP/CC of an SCell.

In each embodiment of the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmission power," "phase rotation," an "antenna port," a "layer," "the number of layers," a "rank," a "resource," a "resource set," a "beam," a "beam width," a "beam angular degree," an "antenna," an "antenna element," a "panel," a "UE panel," a "transmission entity," a "reception entity," and the like may be interchangeably interpreted.

In each embodiment of the present disclosure, MIMO (Multi Input Multi Output), multi-layer, multi-port, and multi-rank may be interchangeably interpreted.

Each embodiment of the present disclosure may be, for example, operation for MIMO (single-user (SU-) MIMO) with one UE.

In each embodiment of the present disclosure, SU-MIMO, PDCCH-MIMO, transmission/reception using multi-layer/port, a PDCCH with multi-layer/port, and transmission/reception using a plurality of (two or more or more than one) ranks/layers/ports/port numbers/port indices may be interchangeably interpreted.

### <First Embodiment>

A first embodiment relates to a method of specifying/configuring/indicating the number of ranks/layers.

A UE may be configured/indicated to receive a PDCCH by using one or a plurality of ranks/layers.

For example, the UE may be configured with the number of ranks/layers for the PDCCH/DCI by using higher layer signaling (for example, RRC/MAC CE).

For example, the UE may be configured with the number of ranks/layers for the PDCCH/DCI by using higher layer signaling (for example, RRC/MAC CE), and may receive the PDCCH/DCI by using the configured number of ranks/layers.

For example, when a plurality of ports are configured for a DMRS for the PDCCH (described in detail in a second embodiment below), and use of one port/layer is configured for reception of the PDCCH, the UE may determine a specific port among the plurality of ports.

For the specific port, a port number may be indicated/notified from a network.

For the specific port, the UE may perform blind detection of the PDCCH for a plurality of port numbers. In other words, the UE may perform blind detection of a plurality of port numbers to determine a port number for the PDCCH to be transmitted.

For example, the UE may be configured with a maximum number of ranks/layers for the PDCCH/DCI by using higher layer signaling (for example, RRC/MAC CE).

For example, the UE may be configured with a maximum number of ranks/layers for the PDCCH/DCI by using higher layer signaling (for example, RRC/MAC CE), and may receive the PDCCH/DCI by using the number of ranks/layers less than or equal to the configured number of ranks/layers.

The configuration by the higher layer signaling may be performed per search space/per CORESET/per BWP/per CC/per band/per UE, for example.

For the PDCCH using the plurality of ranks/layers/ports, configuration of a search space/monitoring occasion/aggregation level may be configured separately or in common for each rank/layer/port.

When the number of ranks/layers = 1 is configured/indicated/used, the UE may perform blind detection of a DCI format/aggregation level/DCI resource.

For example, when reception of a PDCCH using a plurality of ranks/layers is configured, and a specific trigger/event/condition occurs, the UE may perform reception of the PDCCH by using the number of ranks/layers = 1 (may fallback to the operation for the number of ranks/layers = 1).

When the number of ranks/layers > 1 is configured/indicated/used, the UE may count, in blind detection, the number of blind detections for each rank/layer. For example, in a case of 1 layer, the UE may count, as two times, blind detection of the DCI with port index p = 2000 and blind detection of the DCI with p = 2001.

When the number of ranks/layers > 1 is configured/indicated/used, the UE may count, in blind detection, the number of blind detections for a plurality of (for example, all) (different) ranks/layers. For example, in a case of 1 layer, the UE may count, as one time, blind detection of the DCI with port index p = 2000 and blind detection of the DCI with p = 2001 together.

The number (upper limit number) of blind detections of the DCI may be the same for a case where PDCCH reception using a plurality of layers/ranks is configured (PDCCH-MIMO is configured) and a case where PDCCH reception using a plurality of layers/ranks is not configured (PDCCH-MIMO is not configured).

The number (upper limit number) of blind detections of the DCI may differ for a case where PDCCH reception using a plurality of layers/ranks is configured (PDCCH-MIMO is configured) and a case where PDCCH reception using a plurality of layers/ranks is not configured (PDCCH-MIMO is not configured).

For example, an upper limit number of blind detections of the DCI in a case where PDCCH reception using a plurality of layers/ranks is configured (PDCCH-MIMO is configured) may be greater (or less) than an upper limit number of blind detections of the DCI in a case where PDCCH reception using a plurality of layers/ranks is not configured (PDCCH-MIMO is not configured).

An upper limit number of blind detections of the DCI in a case where PDCCH reception using a plurality of layers/ranks is configured (PDCCH-MIMO is configured) may be indicated as M times (where M is any number) an upper limit number of blind detections of the DCI in a case where PDCCH reception using a plurality of layers/ranks is not configured (PDCCH-MIMO is not configured).

The upper limit number of blind detections of the DCI in the case where PDCCH reception using a plurality of layers/ranks is configured (PDCCH-MIMO is configured) may be predefined by a specification, may be reported by using UE capability information, may be configured/notified by using higher layer signaling (RRC/MAC CE), or may be determined by combinations of these.

When being configured with the number of ranks/layers for the PDCCH/DCI by using higher layer signaling (for example, RRC/MAC CE), the UE may perform blind detection of the PDCCH/DCI for (only) the configured rank/layer.

When being configured with the number of ranks/layers for the PDCCH/DCI by using higher layer signaling (for example, RRC/MAC CE), the UE may perform blind detection of the PDCCH/DCI for the configured rank/layer, and may subsequently (or previously) perform blind detection of the PDCCH/DCI for a rank/layer other than the configured rank/layer. In this case, the configured rank/layer may have a higher priority among ranks/layers than ranks/layers other than the configured rank/layer.

When being configured with a maximum number of ranks/layers for the PDCCH/DCI by using higher layer signaling (for example, RRC/MAC CE), the UE may preferentially perform blind detection of the DCI for a lower rank/layer (for example, 1 port (without MIMO)). In this case, the UE may perform blind detection of the DCI for each rank/layer in order from a lower rank/layer to a higher rank/layer. In this case, the lower rank/layer may have a higher priority among ranks/layers than the higher rank/layer.

With such configuration, it is possible to increase the possibility of receiving/transmitting DCI at at least a first port (one port) without exceeding an upper limit number of blind detections.

When being configured with a maximum number of ranks/layers for the PDCCH/DCI by using higher layer signaling (for example, RRC/MAC CE), the UE may preferentially perform blind detection of the DCI for a higher rank/layer. In this case, the UE may perform blind detection of the DCI for each rank/layer in order from a higher rank/layer to a lower rank/layer. In this case, the higher rank/layer may have a higher priority among ranks/layers than the lower rank/layer.

With such configuration, regarding DCI for a configured rank/layer/port, it is possible to increase the possibility of receiving/transmitting the DCI without exceeding an upper limit number of blind detections.

The order/priority of the blind detection may be determined based on at least one of the following:
- the number of ranks/layers
- whether a CSS or a USS is used
- an SS set ID
- an aggregation level
- DCI format

For example, the UE may first perform, in a certain rank/layer, blind detection of at least one of a CSS/USS and an SS set ID (all SS set IDs), and then may perform, in the next rank/layer, blind detection of a CSS/USS and an SS set ID (all SS set IDs). In other words, a rank/layer-based condition may be defined outside of a code (pseudo code) for an existing blind detection method.

For example, the UE may first perform blind detection of each rank/layer for a certain SS set ID (or CSS/USS), and then may perform blind detection of each rank/layer for the next SS set ID (or CSS/USS). In other words, a rank/layer-based condition may be defined at a specific part (for example, inside of the condition for the CSS/USS/SS set ID)) in the code (pseudo code) for the existing blind detection method.

According to the first embodiment described above, it is possible to appropriately specify the number of ranks/layers related to a PDCCH/DCI.

### <Second Embodiment>

A second embodiment relates to a demodulation reference signal (DMRS) of a PDCCH.

The present embodiment below will describe a case of 2 ports/layers as a primary example, but the number of layers/ports/ranks is not limited to this. For example, more than two (for example, 3, 4, 5, 6, 7, 8, or more) ports/layers may be defined, and the present embodiment may be applied to the ports/layers.

### <<Definition of PDCCH DMRS/Antenna Port>>

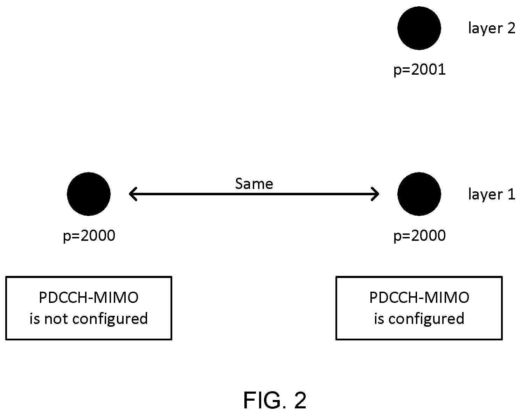

A first layer/rank/port in a case where multi-layer (for example, single-user (SU-) MIMO, PDCCH-MIMO) is not configured and the first layer/rank/port in a case where the multi-layer is configured may have the same port/port index (for example, p = 2000) (see FIG. 2).

The first layer/rank/port in the case where the multi-layer is not configured and the first layer/rank/port in the case where the multi-layer is configured may have different respective ports/port indices.

Layer x+1 may correspond to first port index + x. For example, layer 1, layer 2, layer 3, ... may correspond to p = 2000, 2001, 2002, ..., respectively (see FIG. 2).

### <<Port/Layer/Rank indication>>

A reception port number/index for DCI may be configured/indicated to a UE. The configuration may be performed by using higher layer signaling (RRC/MAC CE)/DCI (for example, previously received DCI), for example.

The UE may (may attempt to) perform detection/reception of the DCI, based on the configuration/indication of the reception port number/index for the DCI.

For example, when the UE is notified of a plurality of port numbers (for example, p = 2000 and 2001), the UE may perform detection of the DCI by using one pattern of a plurality of layers (in this case, two layers) using the plurality of ports.

Note that the present disclosure describes 2000 + n (n is an integer greater than or equal to 0) as examples of the port numbers, but these numbers are merely examples, and any number (for example, 3000 + n, 4000 + n, and the like) may be used as the port numbers.

For example, when the UE is notified of one port number (for example, p = 2000), the UE may perform detection of the DCI by using one pattern of one layer using the one port.

One or more candidates for the reception port number/index for the DCI may be configured/indicated to the UE. The configuration/indication may be performed by using higher layer signaling (RRC/MAC CE)/DCI (for example, previously received DCI), for example.

The UE may (may attempt to) perform detection/reception of the DCI, based on the one or more candidates.

For example, when the UE is notified of candidates for a plurality of port numbers (for example, p = 2000 and 2001), the UE may perform detection of the DCI by using patterns based on a combination of one or a plurality of layers/ports using the plurality of ports (in this case, three patterns, {p = 2000, one layer}, {p = 2001, one layer}, and {p = 2000 and 2001, two layers}).

The UE may be configured/indicated with at least one of one or more candidates (first candidate) for the number of received layers/ranks for the DCI and one or more candidates (second candidate) for the reception port number/index for the DCI. The configuration/indication may be performed by using higher layer signaling (RRC/MAC CE)/DCI (for example, previously received DCI), for example.

The first candidate may be indicated as a maximum number of received layers/ranks.

The UE may (may attempt to) perform detection/reception of the DCI, based on at least one of configuration of the first candidate and configuration of the second candidate.

For example, when the UE is configured with one layer, and is configured with a plurality of port numbers (for example, p = 2000 and 2001) as candidates for the reception port number/index for the DCI, the UE may perform detection of the DCI by using two patterns, {p = 2000, one layer} and {p = 2001, one layer}.

For example, when the UE is configured with two layers, and is configured with a plurality of port numbers (for example, p = 2000 and 2001) as candidates for the reception port number/index for the DCI, the UE may perform detection of the DCI by using one pattern, {p = 2000 and 2001, two layers}.

For example, when the UE is configured with use of two layers or less (up to two layers), and is configured with a plurality of port numbers (for example, p = 2000 and 2001) as candidates for the reception port number/index for the DCI, the UE may perform detection of the DCI by using three patterns, {p = 2000, one layer}, {p = 2001, one layer}, and {p = 2000 and 2001, two layers}.

Note that the DCI (for example, previously received DCI) used for each configuration/indication in the present embodiment may be DCI with a specific DCI format/SS/CORESET.

### <<PDCCH DMRS With Plurality of Ports>>

Application of a PDCCH DMRS with a plurality of ports may be configured per SS/per CORESET/per DL BWP/per UL BWP/per CC/per UE.

The plurality of ports for the PDCCH DMRS may be implemented based on one or a plurality of methods. The method(s) may be only one of the following, or for the method(s), switching between at least two of the following to be defined may be performed by using higher layer signaling (RRC/MAC CE)/DCI:
- FD-OCC
- TD-OCC
- FD-OCC + TD-OCC
- FDM
- TDM

### {FD-OCC}

DMRS (PDCCH DMRS) symbols corresponding to different ports/layers may be mapped to a specific time/frequency resource.

As a DMRS mapping method, the mapping may be performed by using a method defined in an existing specification (Rel. 17 or earlier versions) or the mapping may be performed based on a new rule. For example, the new rule may be at least one of shifting mapping positions of DMRSs in the time direction and increasing/reducing the density of DMRSs in the frequency direction compared to the method according to the existing specification (for example, a case where PDCCHs with multi-port/layer are not configured/indicated).

In this case, a frequency domain (FD-) orthogonal cover code (OCC) may be applied to the DMRS symbols for each physical resource block (PRB)/precoding resource group (PRG)/control channel element (CCE)/PRG bundle size.

A parameter W_{f}(k) (which may be referred to as a sequence element or the like) with different FD-OCCs may be applied to the DMRS symbols for different ports/layers.

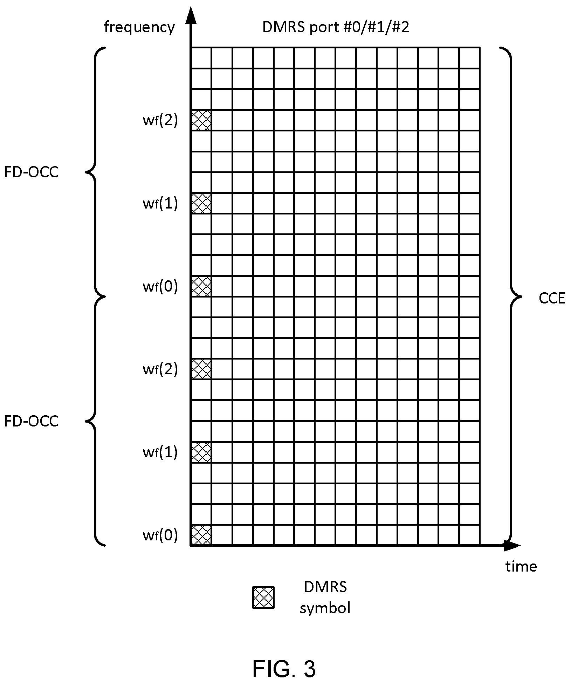

FIG. 3 is a diagram to show an example of the PDCCH DMRS to which the FD-OCC is applied. FIG. 3 shows an example in which a CCE is formed by 14 symbols and 2 PRBs (2*12 subcarriers). Grids in the time direction represent symbols, and grids in the frequency direction represent subcarriers (hereinafter, the same applies to the drawings related to DMRSs).

In the example shown in FIG. 3, a DMRS using 3 ports (DMRS ports #0 to #2) is mapped to a start symbol, and an FD-OCC (FD-OCC parameter W_{f}(k)) is applied for each PRB (12 subcarriers).

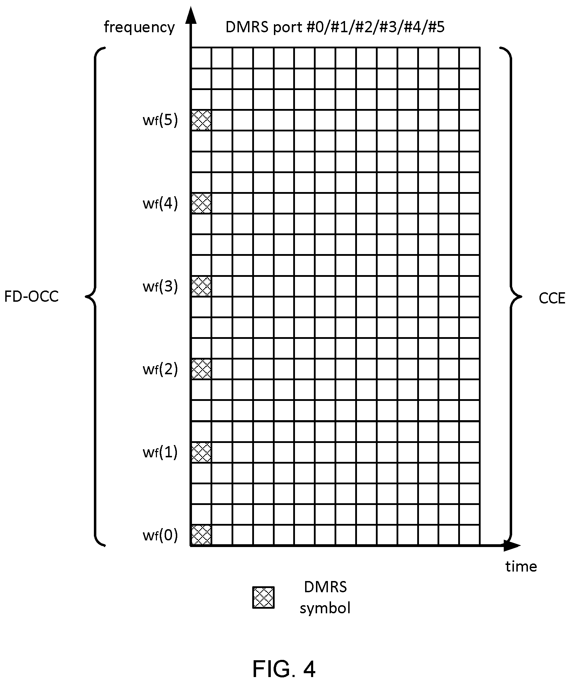

FIG. 4 is a diagram to show another example of the PDCCH DMRS to which the FD-OCC is applied. In the example shown in FIG. 4, a DMRS using 6 ports (DMRS ports #0 to #5) is mapped to a start symbol, and an FD-OCC (FD-OCC parameter W_{f}(k)) is applied for each CCE (24 subcarriers).

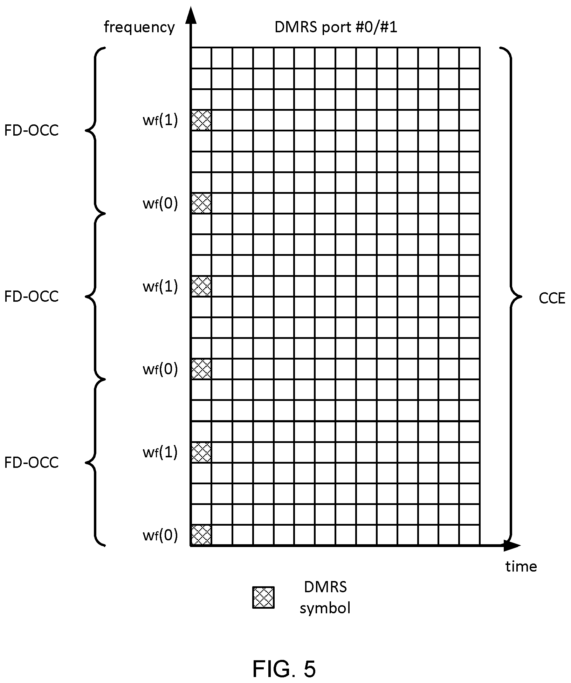

FIG. 5 is a diagram to show another example of the PDCCH DMRS to which the FD-OCC is applied. In the example shown in FIG. 5, a DMRS using 2 ports (DMRS ports #0 and #1) is mapped to a start symbol, and an FD-OCC (FD-OCC parameter W_{f}(k)) is applied for each specific number of subcarriers (for example, 8 subcarriers).

### {TD-OCC}

DMRS (PDCCH DMRS) symbols corresponding to different ports/layers may be mapped to a specific time/frequency resource.

In this case, a time domain (TD-) OCC may be applied to the DMRS symbols in units of a specific time resource (for example, units of a symbol).

When repetition transmissions (repetition) of the PDCCH are configured, the TD-OCC may be applied for each repetition transmission (for the repetition transmissions).

For the repetition transmissions, the PDCCH corresponding to a first rank/layer may be transmitted in a first repetition, and the PDCCH corresponding to a second rank/layer may be transmitted in a second repetition, for example (the same also applies to third and subsequent repetitions and third and subsequent ranks/layers). For the repetition transmissions, the PDCCH corresponding to a plurality of ranks/layers (for example, first to n-th ranks/layers) may be transmitted in each repetition, for example.

The TD-OCC may be applied when the length of duration in CORESET is greater than 1.

A parameter Wₜ(k) (which may be referred to as a sequence element or the like) with different TD-OCCs may be applied to the DMRS symbols for different ports/layers.

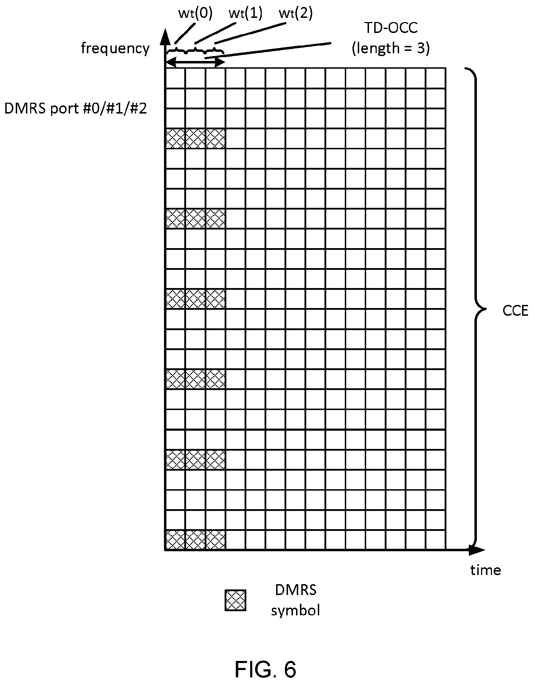

FIG. 6 is a diagram to show an example of the PDCCH DMRS to which the TD-OCC is applied. In the example shown in FIG. 6, DMRSs using 3 ports (DMRS ports #0 to #2) are mapped over three symbols starting from a start symbol, and a TD-OCC (TD-OCC parameter Wₜ(k)) having a length of 3 is applied to DMRS symbols.

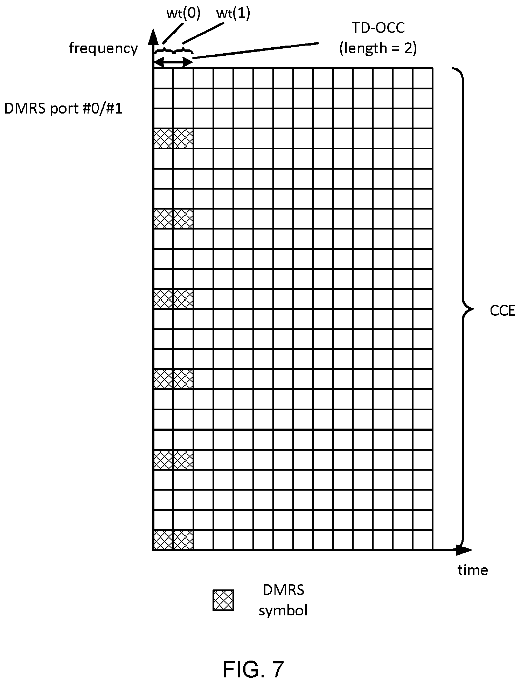

FIG. 7 is a diagram to show another example of the PDCCH DMRS to which the TD-OCC is applied. In the example shown in FIG. 7, DMRSs using 2 ports (DMRS ports #0 and #2) are mapped over two symbols starting from a start symbol, and a TD-OCC (TD-OCC parameter Wₜ(k)) having a length of 2 is applied to DMRS symbols.

### {FD-OCC + TD-OCC}

The application of the FD-OCC above and the application of the TD-OCC above may be combined with each other.

DMRS (PDCCH DMRS) symbols corresponding to different ports/layers may be mapped to a specific time/frequency resource.

In this case, a frequency domain (FD-) orthogonal cover code (OCC) may be applied to the DMRS symbols for each physical resource block (PRB)/precoding resource group (PRG)/control channel element (CCE)/PRG bundle size.

Also, a time domain (TD-) OCC may be applied to the DMRS symbols in units of a specific time resource (for example, units of a symbol).

A parameter W_{f}(k) with different FD-OCCs and a parameter Wₜ(k) with different TD-OCCs may be applied to the DMRS symbols for different ports/layers.

With such configuration, the reception side (for example, the UE) can decode the DMRS more flexibly by using any one of an FD-OCC and a TD-OCC. For example, the characteristics of the FD-OCC deteriorate when a channel delay spread is large, and thus improvement in the characteristics can be expected by decoding the DMRS by using the TD-OCC. The characteristics of the TD-OCC deteriorate when a speed of the UE is high, and thus improvement in the characteristics can be expected by decoding the DMRS by using the FD-OCC.

The UE may perform reception processing of the DMRS by using any one of an FD-OCC and a TD-OCC, based on a specific condition. For example, the UE may decode the DMRS by using the TD-OCC when a first condition is satisfied (for example, when a channel delay spread is large), and may decode the DMRS by using the FD-OCC when a second condition is satisfied (for example, when a speed of the UE is high).

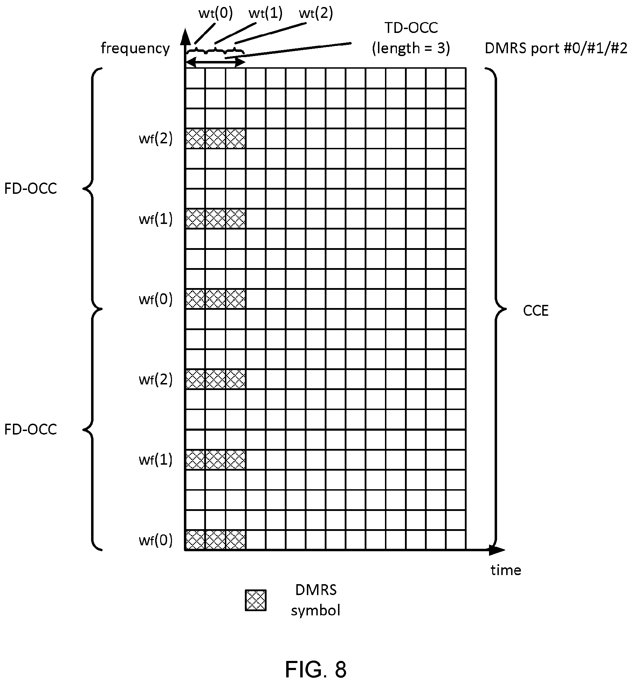

FIG. 8 is a diagram to show an example of the PDCCH DMRS to which the FD-OCC and the TD-OCC are applied. In the example shown in FIG. 8, DMRSs using 3 ports (DMRS ports #0 to #2) are mapped over three symbols starting from a start symbol, in a specific subcarrier, and an FD-OCC (FD-OCC parameter W_{f}(k)) and a TD-OCC (TD-OCC parameter Wₜ(k)) having a length of 3 are each applied to DMRS symbols for each PRB (12 subcarriers).

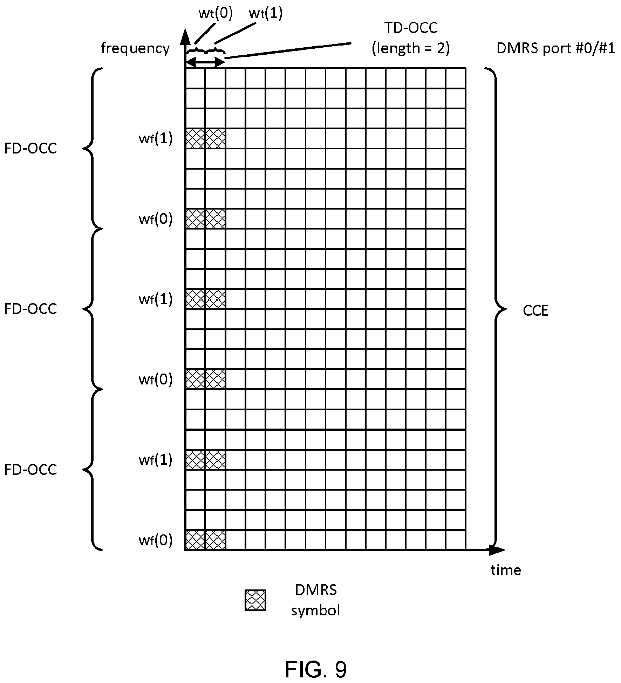

FIG. 9 is a diagram to show another example of the PDCCH DMRS to which the FD-OCC and the TD-OCC are applied. In the example shown in FIG. 9, DMRSs using 2 ports (DMRS ports #0 to #1) are mapped over two symbols starting from a start symbol, in a specific subcarrier, and an FD-OCC (FD-OCC parameter W_{f}(k)) and a TD-OCC (TD-OCC parameter Wₜ(k)) having a length of 2 are each applied to DMRS symbols for each specific number of subcarriers (for example, 8 subcarriers).

### {FDM}

DMRS (PDCCH DMRS) symbols corresponding to different ports/layers may be frequency division multiplexed (FDMed) (in the same time resource/symbol).

In this case, DMRS symbols corresponding to different ports/layers may be FDMed by not transmitting some DMRSs.

For example, only DMRS symbols corresponding to ports/layers configured/indicated to the UE may be transmitted. DMRS symbols corresponding to ports/layers not configured/indicated to the UE may not be transmitted.

For example, a DMRS symbol corresponding to a certain port/layer may be transmitted to a certain UE, and a DMRS symbol corresponding to another port/layer may be transmitted to another UE. In this case, the certain UE may not perform reception processing of a DMRS transmitted to such another UE. In other words, the UE may ignore the DMRS transmitted to such another UE (the DMRS may not be used for channel estimation).

The UE may not assume that the PDCCH/any other DL signal is mapped to resources where some DMRSs are not transmitted. The UE may assume that the PDCCH/any other DL signal is not mapped to the resources where some DMRSs are not transmitted.

The UE may assume that the PDCCH is mapped to resources where some DMRSs are not transmitted.

A sequence length of the DMRS may not change as compared to that in a case where the FDM is not used, and DMRS symbols/REs not to be transmitted may be punctured.

With such configuration, a longer sequence length can be used as compared to a case where the sequence length changes, and thus which is preferable from a specific viewpoint.

A pseudo-random (Pseudo-Noise (PN)) sequence may be mapped only to a DMRS symbol/RE to be actually transmitted. In other words, the sequence length of the DMRS may change compared to that in a case where the FDM is not used.

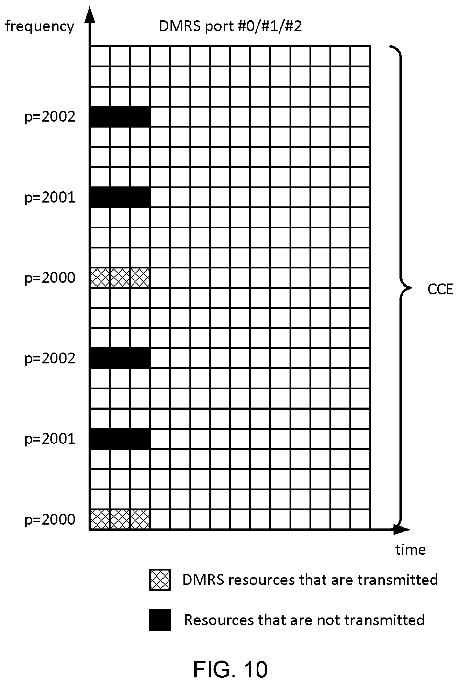

FIG. 10 is a diagram to show an example of the PDCCH DMRS to which the FDM is applied. In the example shown in FIG. 10, DMRS resources corresponding to each port (p = 2000/2001/2002) are configured to be FDMed. In this case, DMRSs/PDCCHs (resources) corresponding to p = 2001/2002 are not transmitted to a UE corresponding to p = 2000.

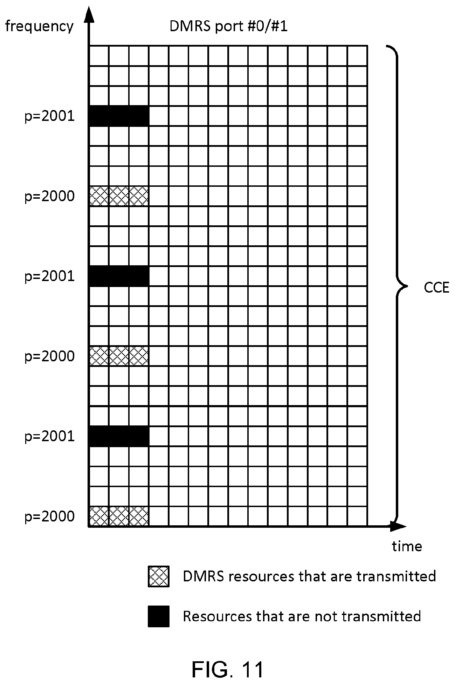

FIG. 11 is a diagram to show another example of the PDCCH DMRS to which the FDM is applied. In the example shown in FIG. 11, DMRS resources corresponding to each port (p = 2000/2001) are configured to be FDMed. In this case, DMRSs/PDCCHs (resources) corresponding to p = 2001 are not transmitted to a UE corresponding to p = 2000.

### {TDM}

DMRS (PDCCH DMRS) symbols corresponding to different ports/layers may be time division multiplexed (TDMed) (in the same time resource/symbol).

In this case, DMRS symbols corresponding to different ports/layers may be TDMed by not transmitting some DMRSs.

For example, only DMRS symbols corresponding to ports/layers configured/indicated to the UE may be transmitted. DMRS symbols corresponding to ports/layers not configured/indicated to the UE may not be transmitted.

For example, a DMRS symbol corresponding to a certain port/layer may be transmitted to a certain UE, and a DMRS symbol corresponding to another port/layer may be transmitted to another UE. In this case, the certain UE may not perform reception processing of a DMRS transmitted to such another UE. In other words, the UE may ignore the DMRS transmitted to such another UE (the DMRS may not be used for channel estimation).

The UE may not assume that the PDCCH/any other DL signal is mapped to resources where some DMRSs are not transmitted. The UE may assume that the PDCCH/any other DL signal is not mapped to the resources where some DMRSs are not transmitted.

The UE may assume that the PDCCH is mapped to resources where some DMRSs are not transmitted.

A sequence length of the DMRS may not change as compared to that in a case where the TDM is not used, and DMRS symbols/REs not to be transmitted may be punctured.

With such configuration, a longer sequence length can be used as compared to a case where the sequence length changes, and thus which is preferable from a specific viewpoint.

A pseudo-random (PN) sequence may be mapped only to a DMRS symbol/RE to be actually transmitted. In other words, the sequence length of the DMRS may change compared to that in a case where the TDM is not used.

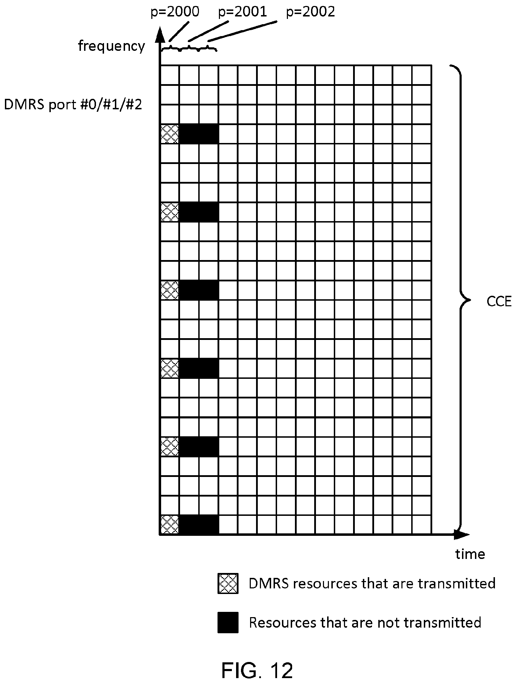

FIG. 12 is a diagram to show an example of the PDCCH DMRS to which the TDM is applied. In the example shown in FIG. 12, DMRS resources corresponding to each port (p = 2000/2001/2002) are configured to be TDMed. In this case, DMRSs/PDCCHs (resources) corresponding to p = 2001/2002 are not transmitted to a UE corresponding to p = 2000.

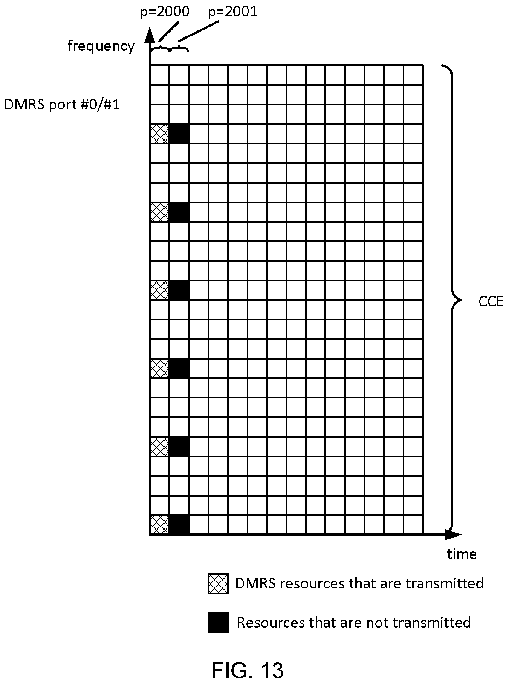

FIG. 13 is a diagram to show another example of the PDCCH DMRS to which the TDM is applied. In the example shown in FIG. 13, DMRS resources corresponding to each port (p = 2000/2001) are configured to be TDMed. In this case, DMRSs/PDCCHs (resources) corresponding to p = 2001 are not transmitted to a UE corresponding to p = 2000.

### <<FD/TD-OCC>>

An OCC to be used for the application of the FD/TD-OCC above will be described below.

A sequence of the OCC may be generated by using at least one of a Walsh code (Hadamard code) and a cyclic shift.

A sequence length of the sequence may be a sequence length of a specific value (for example, 2/4/6).

The UE may use a plurality of (for example, all) OCC indices.

The UE may use some OCC indices among the plurality of (for example, all) OCC indices.

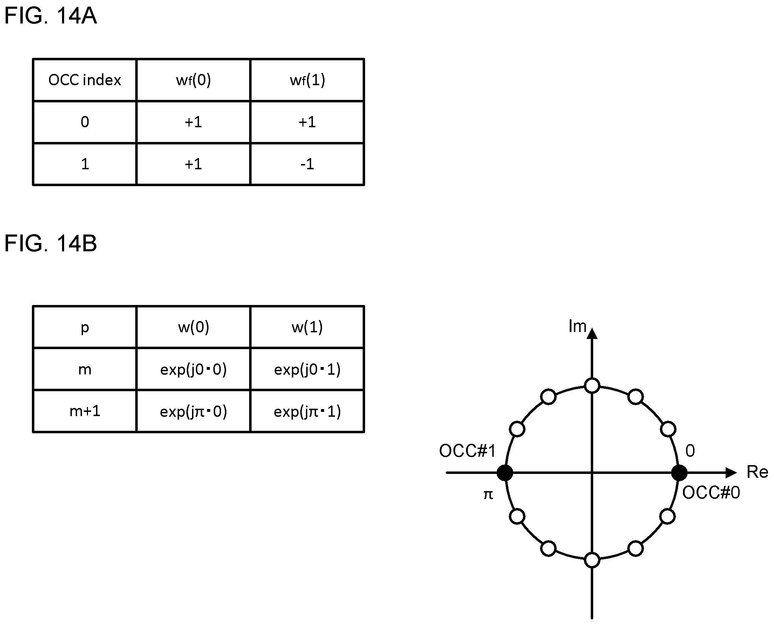

FIG. 14A and FIG. 14B are diagrams to show examples of the OCC sequence. The example of FIG. 14A shows an example of the OCC with the Walsh matrix having a sequence length of 2, and the example of FIG. 14B shows an example of the OCC with the cyclic shift having a sequence length of 2. The OCC having a sequence length of 2 shown in FIG. 14A and FIG. 14B may be applied to the PDCCH DMRS.

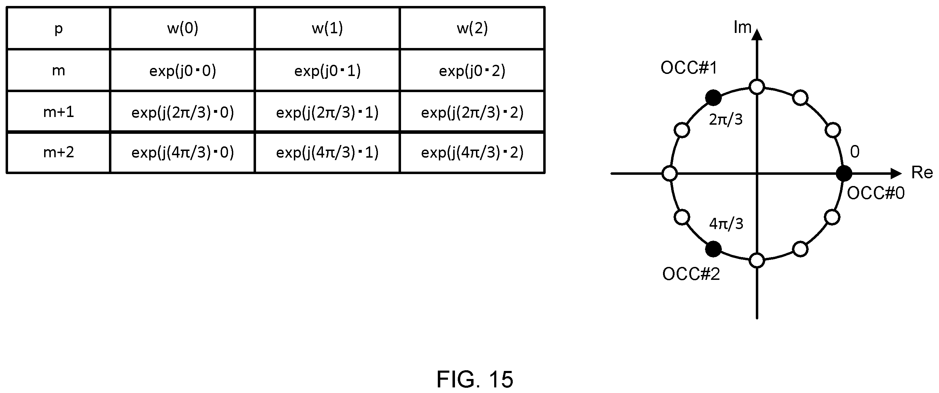

FIG. 15 is a diagram to show another example of the OCC sequence. The example of FIG. 15 shows an example of the OCC with the cyclic shift having a sequence length of 3. The OCC having a sequence length of 3 shown in FIG. 15 may be applied to the PDCCH DMRS.

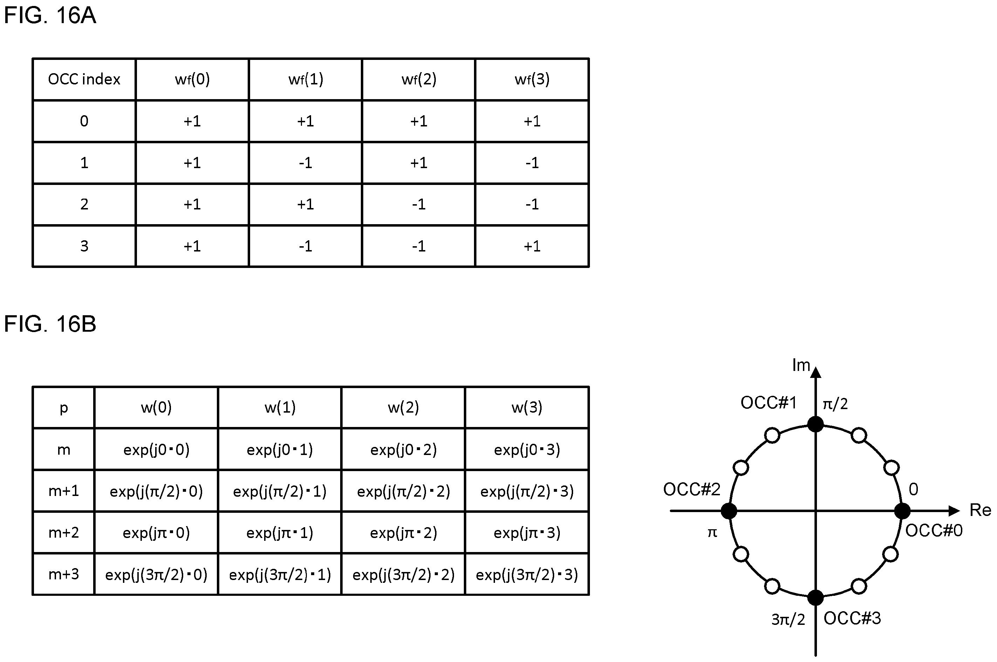

FIG. 16A and FIG. 16B are diagrams to show other examples of the OCC sequence. The example of FIG. 16A shows an example of the OCC with the Walsh matrix having a sequence length of 4, and the example of FIG. 16B shows an example of the OCC with the cyclic shift having a sequence length of 4. The OCC having a sequence length of 4 shown in FIG. 16A and FIG. 16B may be applied to the PDCCH DMRS.

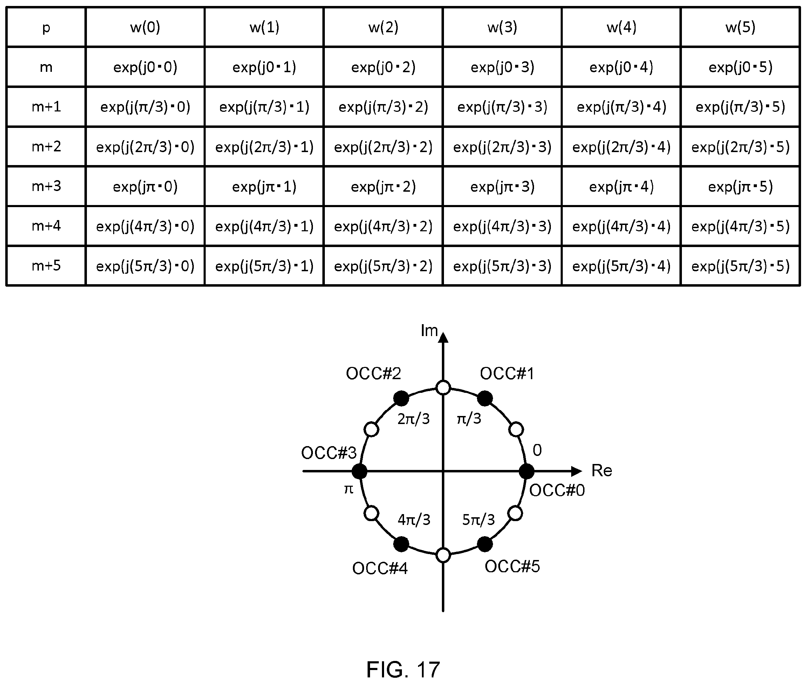

FIG. 17 is a diagram to show another example of the OCC sequence. The example of FIG. 17 shows an example of the OCC with the cyclic shift having a sequence length of 6. The OCC having a sequence length of 6 shown in FIG. 17 may be applied to the PDCCH DMRS.

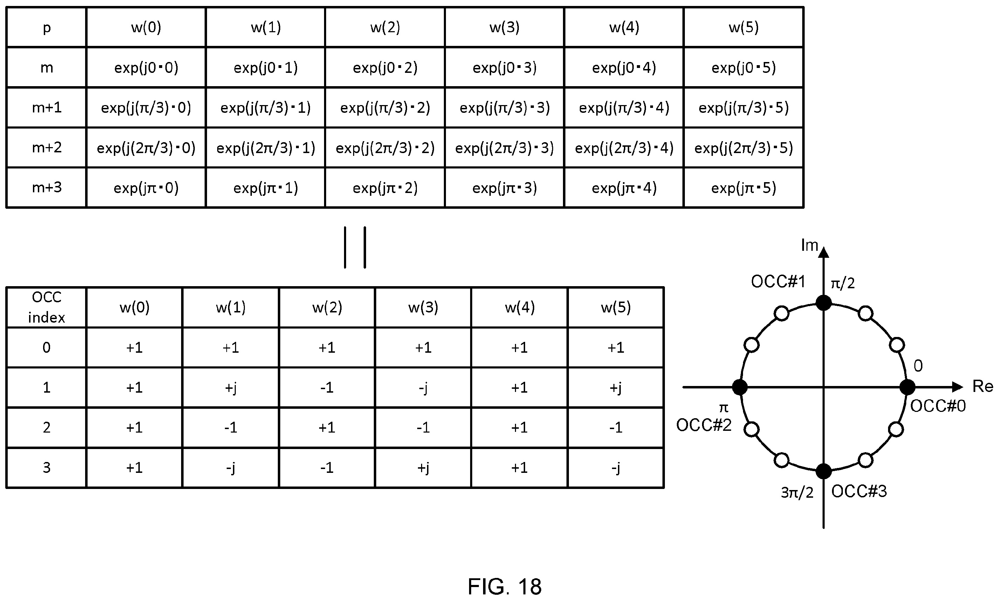

FIG. 18 is a diagram to show another example of the OCC sequence. The example of FIG. 18 shows an example in which four OCCs among six OCCs having a sequence length of 6 are used. The OCC having a sequence length of 4 shown in FIG. 18 may be applied to the PDCCH DMRS.

Note that the values of the sequence shown in the diagrams of the OCC sequence are merely examples, and each value and combination are not limited to this example.

According to the second embodiment described above, it is possible to appropriately define a PDCCH DMRS using a plurality of ranks/layers/ports, and thus PDCCH capacity can be increased.

### <Third Embodiment>

A third embodiment relates to transmission power/power density for a PDCCH/DMRS.

In terms of a range of an amplifier/reception side and the like, it is preferable that transmission power for each symbol/RE be constant. For a conventional (Rel. 17 or earlier versions) PDCCH, power density (for example, Energy Per Resource Element (EPRE)) for PDCCH/DMRS transmission has been constant in each RE in 1 PRB.

Meanwhile, when some DMRSs (DMRS resources) are not transmitted (for example, in the case of the DMRS using the FDM/TDM above), the transmission power is inconstant if the EPRE is configured to be constant.

Referring back to FIG. 11 as an example, the transmission power when some DMRSs are not transmitted will be described. In the example shown in FIG. 11, DMRSs corresponding to port number p = 2000 are transmitted to a certain UE, and DMRSs corresponding to port number p = 2001 are not transmitted.

In this case, when the EPRE is constant, transmission power for a symbol in which the DMRS not to be transmitted is present is reduced (in the case of FIG. 11, the transmission power for a symbol in which the DMRS not to be transmitted is present is 21/24 (87.5%) of that for another symbol).

The third embodiment below describes transmission power/power density for a PDCCH/DMRS for addressing these problems.

Some PDCCHs/DMRSs (resources/REs) may not be transmitted.

A UE may be configured with some PDCCHs/DMRSs (resources/REs) not to be transmitted. For example, the UE may be configured with the PDCCH DMRS using the FDM/TDM above.

The transmission power may be constant for a time resource (for example, a symbol) for a DMRS/PDCCH when some DMRSs/PDCCHs (resources/REs) are not transmitted and for a time resource (for example, a symbol) for a DMRS/PDCCH other than the time resource.

The UE may assume that the transmission power is constant for a time resource (for example, a symbol) for a DMRS/PDCCH when some DMRSs/PDCCHs (resources/REs) are not transmitted and for a time resource (for example, a symbol) for a DMRS/PDCCH other than the time resource.

The UE may assume that transmission power for a time resource (for example, a symbol) for a DMRS/PDCCH when some DMRSs/PDCCHs (resources/REs) are not transmitted is determined based on transmission power for a time resource (for example, a symbol) for a DMRS/PDCCH other than the time resource.

For example, when, in a certain symbol, the number of non-transmitted REs among a plurality of (for example, all) numbers of REs (for example, Nₐₗₗ) in a specific frequency resource (for example, a PRB/PRG/CCE or the like) is defined as P, power density (for example, Effective Isotropic Radiated Power (EIRP)) for a PDCCH/DMRS in the symbol may be specific number (for example, Nₐₗₗ/(Nₐₗₗ - P)) times power density for another symbol.

For example, when, in a certain symbol, the number of non-transmitted REs among the numbers of REs (for example, N_{dmrs}) for a PDCCH DMRS in a specific frequency resource (for example, a PRB/PRG/CCE or the like) is defined as Q, power density (for example, EIRP) for a DMRS in the symbol may be specific number (for example, N_{dmrs}/(N_{dmrs} - Q)) times power density for another symbol.

Note that "when some DMRSs/PDCCHs (resources/REs) are not transmitted" above may be interpreted as "when DMRSs (resources/REs) other than a DMRS (resource/RE) corresponding to a port/layer configured to the present UE are not transmitted" or "when a DMRS (resource/RE) corresponding to a port/layer configured to the present UE and another UE is transmitted."

For example, when a PDCCH DMRS using FDM/TDM is transmitted, and a DMRS (resource/RE) corresponding to a port/layer configured to the present UE and another UE is transmitted, the present UE may assume that transmission power for a resource excluding power for a DMRS (resource/RE) for another UE in a certain symbol is equal to transmission power for a symbol in which the DMRS is not transmitted. In this case, a base station may perform control so as to cause transmission power for a symbol in which DMRSs for a plurality of UEs are transmitted to be higher than transmission power for a symbol in which the DMRSs are not transmitted.

For example, when a PDCCH DMRS using FDM/TDM is transmitted, and a DMRS (resource/RE) corresponding to a port/layer configured to the present UE and another UE is transmitted, the present UE may assume that transmission power for a resource excluding power for a DMRS (resource/RE) for another UE in a certain symbol is lower than transmission power for a symbol in which the DMRS is not transmitted. In this case, the base station may perform control so as to cause transmission power for a symbol in which DMRSs for a plurality of UEs are transmitted to be equal to transmission power for a symbol in which the DMRSs are not transmitted.

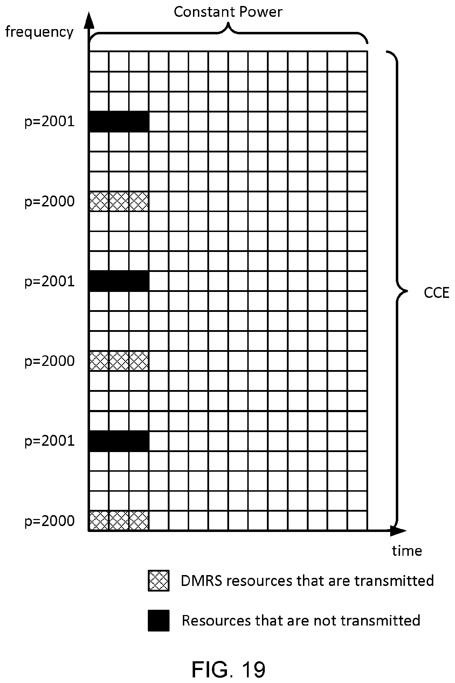

FIG. 19 is a diagram to show an example of the transmission power for the PDCCH/DMRS according to the third embodiment. The example shown in FIG. 19 shows resources in 1 slot (14 symbols) and 1 CCE. In the example shown in FIG. 19, among DMRSs corresponding to DMRS ports #0 and #1, DMRSs corresponding to port number p = 2000 are transmitted and DMRSs corresponding to p = 2001 are not transmitted.

In this case, the UE assumes that transmission power/power density in 1 CCE for respective symbols (symbols #0 to #2) in which some DMRSs are not transmitted and transmission power/power density in 1 CCE for other respective symbols are constant.

According to the third embodiment described above, it is possible to appropriately determine transmission power even when some DMRSs/PDCCHs are not transmitted.

### <Fourth Embodiment>

A fourth embodiment relates to a precoder to be applied to a PDCCH.

For example, whether a DMRS for the PDCCH is transmitted may be configured/indicated to the UE. The configuration/indication may be performed by using higher layer signaling (RRC/MAC CE)/DCI (for example, previously received DCI), for example.

The UE may not be notified of a precoder to be applied to the PDCCH. The UE may assume that the precoder to be applied to the PDCCH is not notified.

For example, when the DMRS for the PDCCH is transmitted, the precoder to be applied to the PDCCH may not be notified.

In this case, the UE may assume/determine that the PDCCH and the DMRS for the PDCCH are transmitted by using the same precoder.

The UE may be notified of a precoder to be applied to the PDCCH. The UE may assume that the precoder to be applied to the PDCCH is notified.

For example, when the DMRS for the PDCCH is not transmitted, the precoder to be applied to the PDCCH may be notified.

In this case, the UE may receive a cell-common/UE-common RS (for example, CRS/CSI-RS/TRS), and may be notified of a precoder for the PDCCH (phase difference) compared with the RS.

The notification of the precoder may be performed by using higher layer signaling (RRC/MAC CE)/DCI (for example, previously received DCI), for example.

Even when the DMRS for the PDCCH is not transmitted, the precoder to be applied to the PDCCH may not be notified.

In this case, the UE may detect DCI by using blind detection, based on specific candidate precoders. The specific candidate precoders may be predefined by a specification, or may be configured/indicated to the UE by using higher layer signaling (RRC/MAC CE)/DCI.

A network/base station may determine a precoder to be applied to the PDCCH, by using Channel Reciprocity, based on UL reception from the UE (for example, an SRS/PUSCH/PUCCH/PUSCH DMRS/PUCCH DMRS).

The network/base station may determine that a precoder determined based on CSI feedback for PDSCH is used for the PDCCH.

For example, the UE may assume that linear polarization (for example, vertical polarization and horizontal polarization) is used for PDCCH transmission in a case of two ports/layers. For example, the UE may assume that circular polarization (for example, right hand circular polarization (RHCP) and left hand circular polarization (LHCP)) is used for PDCCH transmission in a case of two ports/layers.

For example, the UE may assume that a combination of linear polarization and circular polarization is used for PDCCH transmission in a case of 3 or 4 ports/layers.

The UE may perform a report (for example, CSI feedback) for determination of a precoder for the PDCCH. The UE may receive a specific DL reference signal (for example, a CSI-RS/TRS), and may generate/determine the report. The report may be performed by using UCI/MAC CE (PUSCH), for example.

The report may be performed only when PDCCH reception using layers/ports greater than (greater than or equal to) a specific number of (for example, 2, 4) layers/ports is configured.

The report may be performed only when PDCCH reception using layers/ports less than (less than or equal to) a specific number of (for example, 2, 4) layers/ports is configured.

The UE may receive, from the network/base station, an indication for determination of the precoder (precoder indication) for the PDCCH. The indication may be performed by using DCI/MAC CE, for example. The indication may be transmitted based on a report from the UE.

According to the fourth embodiment described above, it is possible to appropriately determine a precoder to be applied to a PDCCH.

### <Fifth Embodiment>

A fifth embodiment relates to operation using multi-TRP.

A PDCCH (PDCCH-MIMO) using multi-layer/port may be configured to a UE.

Respective (different/same) TCI states may correspond to PDCCH ports/layers. The correspondence of the TCI states may be configured/indicated by using higher layer signaling (RRC/MAC

### CE)/DCI.

One or a plurality of TCI states (TRPs) may be associated with one PDCCH port/layer.

As described above, multi-TRP is used for a PDCCH using multi-layer/port, thereby enabling an execution rank expected by increase in the number of paths to be improved, and thus characteristics can be improved.

A rule related to a priority of a TCI state and a specific QCL type (for example, QCL type D) may be defined.

The rule related to the priority may include a priority order including at least one of the following size relationships:
- CSS > USS
- Lower (or higher) CC index > higher (or lower) CC index
- Lower (or higher) SS set index > higher (or lower) SS set index

For example, the UE may determine the priority for each port/layer in each SS set ID. In other words, a port/layer-based condition may be defined outside of an equation for an existing priority determination method.

For example, the UE may determine the priority per SS set ID for a plurality of (for example, all) ports/layers. In other words, a port/layer-based condition may be defined at a specific part (for example, inside of the condition for the SS set ID)) in the equation for the existing priority determination method.

For example, when a plurality of layers/ports and a plurality of TCI states correspond to one SS (one TCI state corresponds to one port/layer), the UE may receive a PDCCH for the SS with the highest priority, and may receive a PDCCH for another SS having a QCL relationship (for example, QCL type D) with at least one of the plurality of TCI states. In this case, the UE may not receive a PDCCH for an SS other than the SS with the received PDCCH.

According to the fifth embodiment described above, multi-TRP is used for a multi-layer PDCCH, thereby enabling operation with which further improvement in characteristics can be expected.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control/information for at least one of the embodiments above (for example, PDCCH reception using multi-layer/port/rank, PDCCH reception in SU-MIMO)
- supporting of reception of a PDCCH DMRS using an FD-OCC/TD-OCC/FDM/TDM
- the number of layers/ports/ranks for a supported PDCCH/DMRS

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of PDCCH reception using multi-layer/port/rank, any RRC parameter for a specific release (for example, Rel. 18/19), or the like.

When the UE does not support at least one of the specific UE capabilities above or is not configured with the specific information, operation of Rel. 15/16 may be applied, for example.

### (Supplementary Note A)

Regarding one embodiment of the present disclosure, the following supplementary notes of the invention will be given.

### {Supplementary Note A-1}

A terminal including: a receiving section that receives a configuration related to a number or a maximum number of layers to be used for reception of a physical downlink control channel (PDCCH) using a plurality of layers; and a control section that controls, based on the configuration, reception of the PDCCH using the plurality of layers.

### {Supplementary Note A-2}

The terminal according to supplementary note A-1, wherein the control section determines that a layer having a smaller or larger number, among the plurality of layers, has a higher priority.

### {Supplementary Note A-3}

The terminal according to supplementary note A-1 or A-2, wherein when a demodulation reference signal for the PDCCH is not transmitted, the receiving section receives information related to a precoder to be applied to the PDCCH, and when the demodulation reference signal is transmitted, the control section assumes that the PDCCH and the demodulation reference signal are transmitted by using a same precoder.

### {Supplementary Note A-4}

The terminal according to any one of supplementary notes A-1 to A-3, wherein the plurality of layers correspond to different transmission configuration indication (TCI) states.

### (Supplementary Note B)

Regarding one embodiment of the present disclosure, the following supplementary notes of the invention will be given.

### {Supplementary Note B-1}

A terminal including: a receiving section that receives a demodulation reference signal (DMRS) mapped by using a frequency domain orthogonal cover code (FD-OCC), a time domain OCC (TD-OCC), frequency domain and time domain OCCs, frequency division multiplexing (FDM), or time division multiplexing (TDM), the DMRS being for a physical downlink control channel (PDCCH) using a plurality of layers; and a control section that controls reception of the PDCCH, based on the DMRS.

### {Supplementary Note B-2}

The terminal according to supplementary note B-1, wherein the control section determines that an antenna port number for a first layer of the plurality of layers and an antenna port number corresponding to a PDCCH not using the plurality of layers are the same.

### {Supplementary Note B-3}

The terminal according to supplementary note B-1 or B-2, wherein the receiving section receives a first configuration related to a number of the plurality of layers and a second configuration related to an antenna port number corresponding to the PDCCH and the DMRS, and the control section performs, based on the first configuration and the second configuration, detection of downlink control information transmitted on the PDCCH.

### {Supplementary Note B-4}

The terminal according to any one of supplementary notes B-1 to B-3, wherein when, in a symbol in which the DMRS with use of the FDM or the DMRS with use of the TDM is transmitted, a DMRS symbol corresponding to a specific port is not transmitted, the control section assumes that power density in a time resource for the DMRS symbol is equal to power density in a time resource other than the time resource.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

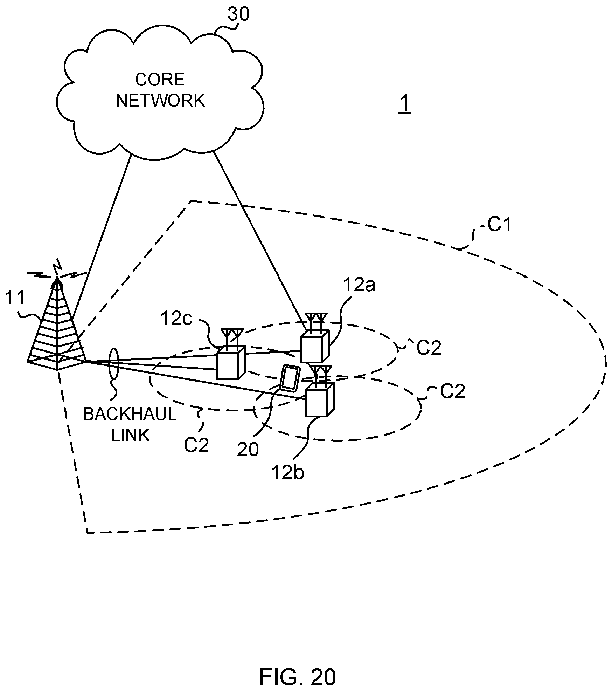

FIG. 20 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

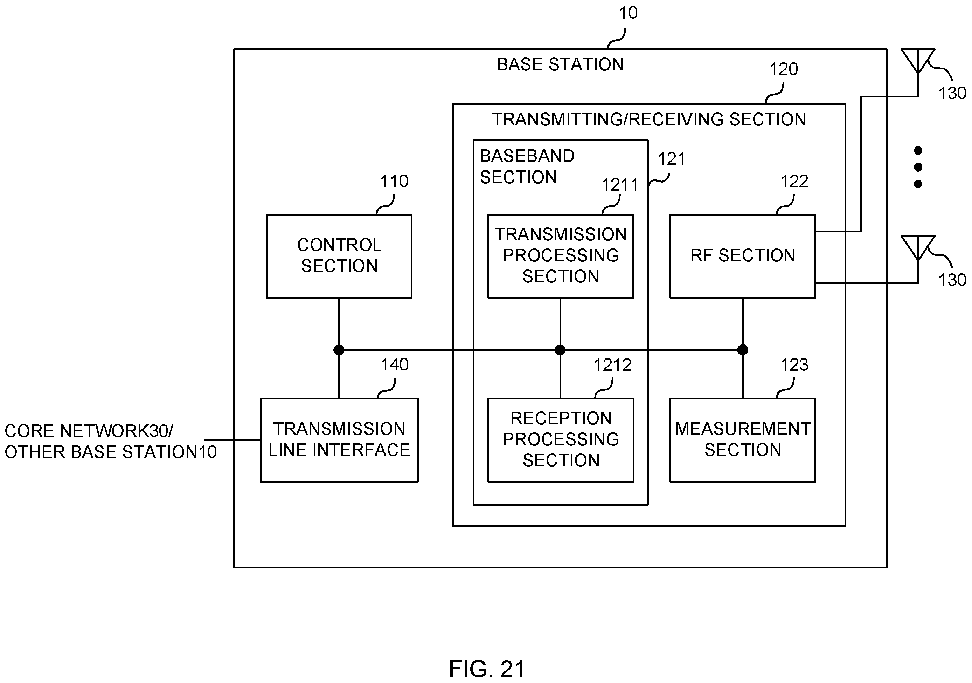

FIG. 21 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a configuration related to a number or a maximum number of layers to be used for reception of a physical downlink control channel (PDCCH) using a plurality of layers. The control section 110 may control, by using the configuration, transmission of the PDCCH using the plurality of layers (first embodiment).

The transmitting/receiving section 120 may transmit a demodulation reference signal (DMRS) mapped by using a frequency domain orthogonal cover code (FD-OCC), a time domain OCC (TD-OCC), frequency domain and time domain OCCs, frequency division multiplexing (FDM), or time division multiplexing (TDM), the DMRS being for a physical downlink control channel (PDCCH) using a plurality of layers. The control section 110 may indicate reception processing of the PDCCH by using the DMRS (second embodiment).

### (User Terminal)

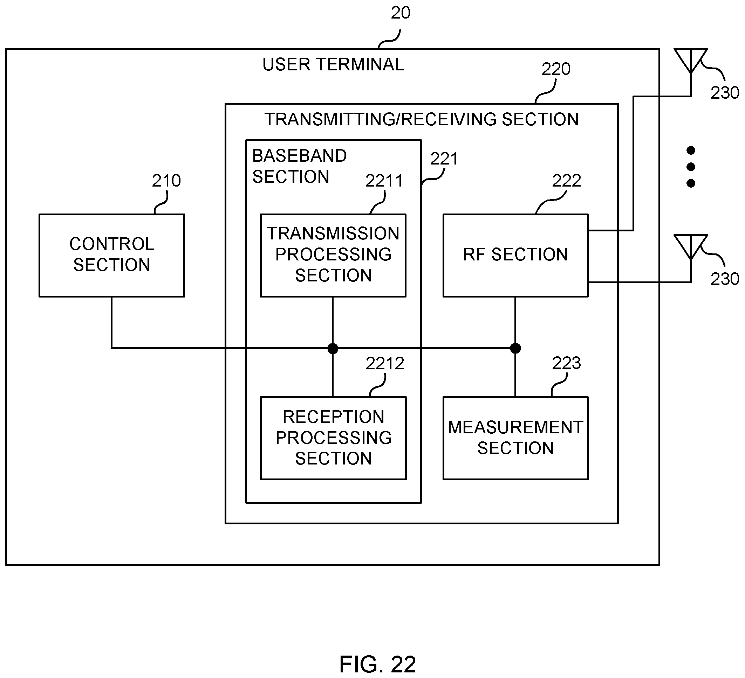

FIG. 22 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analogdigital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration related to a number or a maximum number of layers to be used for reception of a physical downlink control channel (PDCCH) using a plurality of layers. The control section 210 may control, based on the configuration, reception of the PDCCH using the plurality of layers (first embodiment).

The control section 210 may determine that a layer having a smaller or larger number, among the plurality of layers, has a higher priority (first embodiment).

When a demodulation reference signal for the PDCCH is not transmitted, the transmitting/receiving section 220 may receive information related to a precoder to be applied to the PDCCH. When the demodulation reference signal is transmitted, the control section 210 may assume that the PDCCH and the demodulation reference signal are transmitted by using a same precoder (fourth embodiment).

The plurality of layers may correspond to different transmission configuration indication (TCI) states (fifth embodiment).

The transmitting/receiving section 220 may receive a demodulation reference signal (DMRS) mapped by using a frequency domain orthogonal cover code (FD-OCC), a time domain OCC (TD-OCC), frequency domain and time domain OCCs, frequency division multiplexing (FDM), or time division multiplexing (TDM), the DMRS being for a physical downlink control channel (PDCCH) using a plurality of layers. The control section 210 may control reception of the PDCCH, based on the DMRS (second embodiment).

The control section 210 may determine that an antenna port number for a first layer of the plurality of layers and an antenna port number corresponding to a PDCCH not using the plurality of layers are the same (second embodiment).

The transmitting/receiving section 220 may receive a first configuration related to a number of the plurality of layers and a second configuration related to an antenna port number corresponding to the PDCCH and the DMRS. The control section 210 may perform, based on the first configuration and the second configuration, detection of downlink control information transmitted on the PDCCH (second embodiment).

When, in a symbol in which the DMRS with use of the FDM or the DMRS with use of the TDM is transmitted, a DMRS symbol corresponding to a specific port is not transmitted, the control section 210 may assume that power density in a time resource for the DMRS symbol is equal to power density in a time resource other than the time resource (third embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

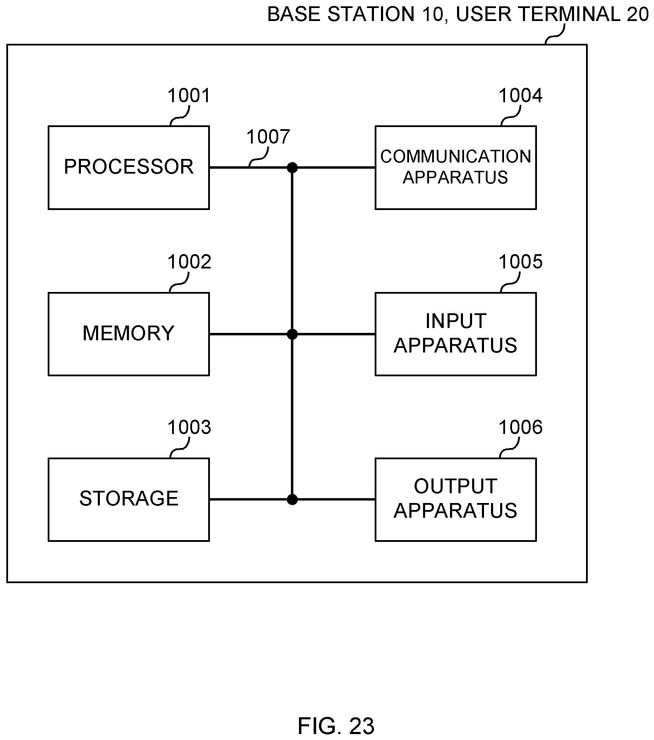

For example, a base station, a user terminal, and so on according to one embodiment of the present disclosure may function as a computer that executes the processes of the radio communication method of the present disclosure. FIG. 23 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

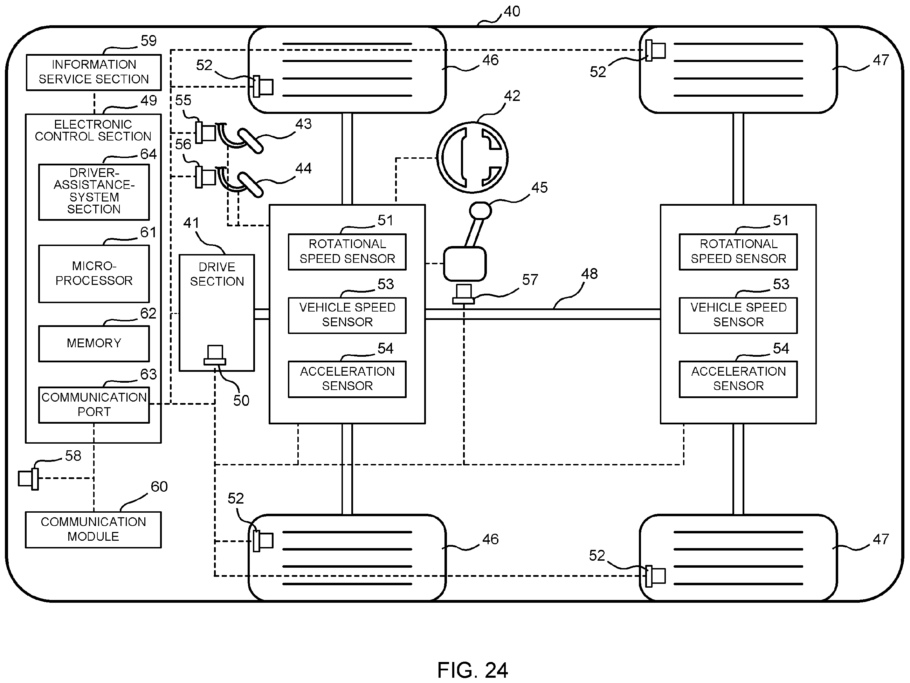

FIG. 24 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, intervehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a toinfinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a demodulation reference signal (DMRS) mapped by using a frequency domain orthogonal cover code (FD-OCC), a time domain OCC (TD-OCC), frequency domain and time domain OCCs, frequency division multiplexing (FDM), or time division multiplexing (TDM), the DMRS being for a physical downlink control channel (PDCCH) using a plurality of layers; and
a control section that controls reception of the PDCCH, based on the DMRS.

2. The terminal according to claim 1, wherein
the control section determines that an antenna port number for a first layer of the plurality of layers and an antenna port number corresponding to a PDCCH not using the plurality of layers are the same.

3. The terminal according to claim 1, wherein
the receiving section receives a first configuration related to a number of the plurality of layers and a second configuration related to an antenna port number corresponding to the PDCCH and the DMRS, and
the control section performs, based on the first configuration and the second configuration, detection of downlink control information transmitted on the PDCCH.

4. The terminal according to claim 1, wherein
when, in a symbol in which the DMRS with use of the FDM or the DMRS with use of the TDM is transmitted, a DMRS symbol corresponding to a specific port is not transmitted, the control section assumes that power density in a time resource for the DMRS symbol is equal to power density in a time resource other than the time resource.

5. A radio communication method for a terminal, the radio communication method comprising:
receiving a demodulation reference signal (DMRS) mapped by using a frequency domain orthogonal cover code (FD-OCC), a time domain OCC (TD-OCC), frequency domain and time domain OCCs, frequency division multiplexing (FDM), or time division multiplexing (TDM), the DMRS being for a physical downlink control channel (PDCCH) using a plurality of layers; and
controlling reception of the PDCCH, based on the DMRS.

6. A base station comprising:
a transmitting section that transmits a demodulation reference signal (DMRS) mapped by using a frequency domain orthogonal cover code (FD-OCC), a time domain OCC (TD-OCC), frequency domain and time domain OCCs, frequency division multiplexing (FDM), or time division multiplexing (TDM), the DMRS being for a physical downlink control channel (PDCCH) using a plurality of layers; and
a control section that indicates reception processing of the PDCCH by using the DMRS.
